# EUROPEAN PATENT SPECIFICATION

(11) **EP 2 452 526 B1**
(45) Date of publication and mention of the grant of the patent: **18.10.2017**
(21) Application number: 10797377.8
(22) Date of filing: 24.06.2010
(51) Int. Cl.: H04W 48/18

(54) **A METHOD AND SYSTEM FOR MANAGING ROAMING OF A MOBILE EQUIPMENT**
VERFAHREN UND SYSTEM ZUR VERWALTUNG DES ROAMINGS EINES MOBILGERÄTES
PROCÉDÉ ET SYSTÈME DE GESTION D'ITINÉRANCE D'UN ÉQUIPEMENT MOBILE

(30) Priority: 06.07.2009 SE 0950524; 06.07.2009 US 213710 P
(43) Date of publication of application: 16.05.2012
(73) Proprietor: Synapse International S.A., 8211 Mamer (LU)
(72) Inventor: BERGQVIST, Per, LU-2335 Luxembourg (LU); ERICSON, Lars-Göran, S-192 51 Sollentuna (SE); WILLEHADSON, Stefen, S-757 57 Uppsala (SE)
(74) Representative: Groth & Co. KB
(86) International application number: PCT/SE2010/050722
(87) International publication number: WO 2011/005170

(56) References cited:
- EP-A1- 1 565 028
- EP-A1- 1 895 800
- WO-A1-01/54435
- WO-A1-2004/066663
- WO-A1-2009/018534
- WO-A2-2005/086927
- WO-A2-2008/027660
- US-A1- 2004 087 305
- US-A1- 2004 192 306
- US-A1- 2006 089 140

## Description

### Field of the invention

The present invention relates in a first aspect to a system operable to manage roaming of a mobile equipment of a subscriber.

According to a second aspect the present invention relates to a method for managing roaming of a mobile equipment of a subscriber.

According to a third aspect the present invention relates to at least one computer program product for managing roaming of a mobile equipment of a subscriber.

### Background of the invention

When a mobile equipment is to be roamed into a foreign network several issues arises, namely:
A foreign network shall be selected by the mobile equipment and roamed into. The home operator might need to inform the subscriber about the roaming situation and the cost for making/receiving phone calls, sending/receiving messages and using transferring data. In some countries this is mandatory (legally).
The home operator might need to be able to monitor the subscribers that have roamed into the foreign networks in order to build statistics for current and future roaming agreements with other operators.

The list in the mobile equipment containing the allowed networks is possible to update over the air. This makes it possible for an operator to change the list when pricing models, agreements and operator constellations change. When a subscriber enters a roaming area the mobile equipment will select the preferred network from the list if it is present in the area.

The list is updated based on triggers from a SS7 based system thus when a subscriber enters a roaming area a new list will be sent to him/her from the network. The list contains the preferred operators to use.

The size of the list is limited meaning that it will never be possible to list all the preferred networks in it.

A solution where a special application resides on the SIM card also exists. This application communicates with a server in the network in order to keep the list updated.

When a mobile equipment is roamed into a foreign network it is common to inform the subscriber about the situation and the cost for making calls. Often a message is sent to the subscriber based on probes that are connected to the operators SS7 international links. The system using the probes traps roaming events and based on these events appropriate messages are generated and sent to the roaming subscribers.

When a subscriber travels to another country where he/she will roam into a network it is quite likely that one of the preferred networks is not defined in the list. This means that the subscriber will use an operator that is more expensive to use for the home operator. The list can be updated from the operator in this case but the update in itself has a cost and the equipment will not change to a preferred network automatically. This also means that actual usage of the equipment will be more expensive for the home operator as well. To conclude, this will affect the revenue stream for the operator.

In cases were a custom application needs to reside on the SIM card, the current cards in use needs to be exchanged by the operator. This is in most cases a too expensive operation to perform for most operators.

Messages sent to inform the subscriber about the roaming situation might be obtrusive if they are sent too often. Therefore it is necessary to delay the message in some way or wait for some proper indication that the message shall be sent. Current system handling these messages only waits a certain time prior the actual sending of the message and in some situation this behaviour can be quite obtrusive for the subscriber. This becomes especially important in the situation where a roaming list is sent to the mobile equipment when the subscriber enters a foreign network. It will take some time depending on the movement of the subscriber before the mobile equipment selects a preferred network and to send a message during this time where the mobile equipment is roamed into the "wrong" network only for a short time prior the change to the "right" network is not acceptable for the subscriber.

In order to get information about in which foreign networks the subscribers for a particular operator resides it is necessary to inspect the HLRNLR:s which is not feasible in a situation when a real time action is necessary based on real time information. Examples of actions are roaming lists and roaming information messages that are to be sent to a subscriber.

The patent document EP 1 463 366 A2 relates to selection of a preferred network for roaming and more particularly to a method and system for influencing a roaming mobile unit to make such a selection. In one embodiment the system comprises a remote preference unit for influencing visited network selection by roaming mobile units. The preference unit comprises a detection unit for detection of roaming activity by mobile units, a database indicative of preferred networks for selection by roaming units, and an output unit, associated with the detection probe and the database to output indications to influence network selection by the detected roaming mobile units. Monitoring may be of the signalling connection to the home network over which control signals are exchanged with the roaming network, for example MAP and SS/ protocol signalling.

The patent document WO 2005/081962 A2 relates to Integrated Cellular Voice over Internet Protocol ("VoIP") systems ("ICV systems") that redirect or reroute wireless network voice and data traffic to roaming subscribers via VoIP networks. The ICV system monitors roaming links of a first communication system. The first communication system may include a home network and a visited network. The ICV system detects a mobile device registering with the visited network. The ICV system receives location information corresponding to a location of the mobile device and selects a routing number corresponding to the location. The ICV system uses the selected routing number to transfer calls received at the home network to the mobile device via a second communication system.

The patent document WO 2005/107115 A2 relates to a system and method for providing a seamless roaming solution to a portable client. The communication system comprises a server, at least one portable communication client adapted to communicate with the server via the communication networks, the communication client comprising a connection manager adapted to determine availability of each of the plural communication networks to communicate between the communication client and the server; select one of the communication networks from available ones of the plural communication networks in accordance with predetermined preferences; and establish a connection with the selected one of the communication networks.

The patent document WO 2008/123983 A2 relates to mobile communication corresponding to reduce data roaming charges. Fig. 1 in this document shows system architecture for optimizing data usage at a visited network while roaming. The system architecture comprises a probe at the IP interface Gp in front of the HPMN GGSN and an SS (or Sigtran) -based traffic steering application conducted either in an in-signalling path mode or according to a passive monitoring or other approach. The probe can inform the Data Roaming Optimizer of the amount of one or more variables corresponding to a roamer's data usage.

The patent document WO 2008/103446 A2 relates to a method for facilitating mobile communication of a subscriber roaming in an FPMN. The method includes assigning the FPMN MSISDN by an SG to the subscriber, based on a subscription activation request received from the subscriber. The SG is deployed at either the FPMN or an MVNO of the FPMN. The method further includes detecting passively by the SG, the subscribers registration with the FPMN. The SG then sends a default MSISDN to an FPMN VLR. The SG then modifies the default MSISDN to the HPMN MSISDN based on an MSISDN change request from the subscriber. The SG then facilitates mobile communication of the subscriber in the FPMN using the default MSISDN and the HPMN MSISDN.

The patent document US 2006/0126809 A1 relates to metering or charging for data transfer including data transferred using a protocol such as the Hyper Text Transfer Protocol (HTTP). A packet inspection system is provided with data inspection logic for inspecting subscriber packet traffic. The system includes a pre-rating classification table associated with the data inspection logic. The pre-rating classification table includes a table having one or more entry for static or slowly changing rating aspects of traffic applications and/or one or more entries identifying a dynamic changing rating aspect of a traffic application. A server with a rating engine is also provided.

The patent document US 2007/0218871 A1 relates to a system that facilitates detecting and analyzing mobility management messages in connection with providing dual mode services comprising, a receiver component that receives a mobility management message from an enterprise network; and an analysis component communicatively coupled to the receiver component that determines a type of the mobility management message and further determines whether or not to allow a mobility management transaction corresponding to the mobility management message based at least in part upon the determined type.

The patent document US 2007/0153741 A1 relates to seamless roaming across wireless subnets using source address forwarding. Each network element has a Layer 2 (L2) bridge capability and an associated L2 bridge forwarding table.

The patent document WO 01/54435 A1 relates to a unique method and apparatus to dynamically maintain different Intelligent Roaming Database (IRDB) or Preferred Roaming List (PRL) in a mobile handset. The current location of the mobile device or other individualized aspect of the mobile device (e. g., class of device, time of day, etc.) is used to determine and select one of a plurality of wireless carrier code list (i. e., IRDBs or PRLs) for download to a particular mobile device. Individual IRDBs may be developed for each mobile device providing a customized wireless carrier code list based on a type of subscription plan, etc. or other network or subscriber based feature.

### Summary of the invention

The above mentioned problems are solved by a system operable to manage roaming of a mobile equipment of a subscriber, when the mobile equipment is roaming between a home network and a foreign network according to Claim 1. The system comprises a Home Location Register connected to the home network. The system also comprises N number of monitor means, wherein N is an integer, and N ≥ 1. Each monitor means is operable to monitor a cable in order to detect packets sent on the cable. The system also comprises a control system connected to the N number of monitor means, and operable to decide if a packet is a roaming event. If it is decided that a packet is a roaming event, the control system is also operable to trigger an action in connection to roaming. The system also comprises a first means operable to store a first list customized for each subscriber, the first list comprises information regarding the countries visited by the mobile equipment, number of times a certain country have been visited by the mobile equipment, and for how long time the certain country have been visited by the mobile equipment, a second means operable to store a second list customized for each subscriber, the second list comprises information about preferred operators for a part of the countries on the first list, wherein the control system also is connected to the home network, the foreign network, the Home Location Register, the first means, and the second means, and if the action triggered by the control system is to update the first list, and wherein the control system also is operable to periodically examine the first list, and if the first list has changed above a predetermined threshold value, to update the second list, and thereafter to send the updated second list to the mobile equipment.

A further advantage in this context is achieved if each monitor means is a passive probe.

According to another embodiment it is an advantage if each monitor means is an active probe.

According to a further embodiment it is an advantage if each monitor means is a router, or a switch operable to perform port mirroring.

Furthermore, it is an advantage in this context if each active probe is a filter means operable to discard some of the packets, and to forward the rest of the packets.

The above mentioned problems are also solved with a method for managing roaming of a mobile equipment of a subscriber, with the aid of a system, when the mobile equipment is roaming between a home network and a foreign network according to Claim 6. The method comprises the steps: with the aid of N number of monitor means comprised in the system, wherein N is an integer, and N ≥ 1, each monitor means monitor a cable in order to detect packets sent on the cable; with the aid of a control system comprised in the system, and connected to the N number of monitor means, to decide if a packet is a roaming event; and if it is detected that a packet is a roaming event, with the aid of the control system, to trigger an action in connection to roaming. The method also comprises the steps: with the aid of a first means comprised in the system, to store a first list customized for each subscriber, the first list comprises information regarding the countries visited by the mobile equipment, number of times a certain country have been visited by the mobile equipment, and for how long time the certain country have been visited by the mobile equipment; with the aid of a second means comprised in the system, to store a second list customized for each subscriber, the second list comprises information about preferred operators for a part of the countries on the first list; wherein the action triggered by the control system is to update the first list; with the aid of the control system, to periodically examine the first list; if the first list has changed above a predetermined threshold, with the aid of the control system, to update the second list; and to send the updated second list to the mobile equipment.

A further advantage in this context is achieved if each monitor means is a passive probe.

According to another embodiment it is an advantage if each monitor means is an active probe.

According to a further embodiment it is an advantage if each monitor means is a router, or a switch, and if the method also comprises the step: with the aid of the router, or switch, to perform port mirroring.

Furthermore, it is an advantage in this context if each active probe is a filter means, and if the method also comprises the step: with the aid of the filter means, to discard some of the packets, and to forward the rest of the packets.

The above mentioned problems are also solved with at least one computer program product according to Claim 11.

It will be noted that the term "comprises/comprising" as used in this description is intended to denote the presence of a given characteristic, step or component, without excluding the presence of one or more other characteristic, features, integers, steps, components or groups thereof.

Embodiments of the invention will now be described with reference to the accompanying drawings, in which:

### Brief description of the drawings

Fig. 1 is a block diagram of a system operable to manage roaming of a mobile equipment according to the present invention;
Fig. 2 is a block diagram of a first embodiment of a monitor means comprised in the system disclosed in Fig. 1;
Fig. 3 is a block diagram of a second embodiment of a monitor means comprised in the system disclosed in Fig. 1;
Fig. 4 is a block diagram of a third embodiment of a monitor means comprised in the system disclosed in Fig. 1;
Fig. 5 discloses schematically the situation where two nodes are connected with two cables;
Fig. 6 is a more detailed block diagram of a first embodiment of a system operable to manage roaming of a mobile equipment according to the present invention;
Fig. 7 is a more detailed block diagram of a second embodiment of a system operable to manage roaming of a mobile equipment according to the present invention;
Fig. 8 is a more detailed block diagram of a third embodiment of a system operable to manage roaming of a mobile equipment according to the present invention;
Fig. 9 is a more detailed block diagram of a fourth embodiment of a system operable to manage roaming of a mobile equipment according to the present invention;
Fig. 10 is a flow chart of a method for managing roaming of a mobile equipment according to the present invention; and
Fig. 11 schematically shows a number of computer program products according to the present invention.

### Detailed description of the preferred embodiments

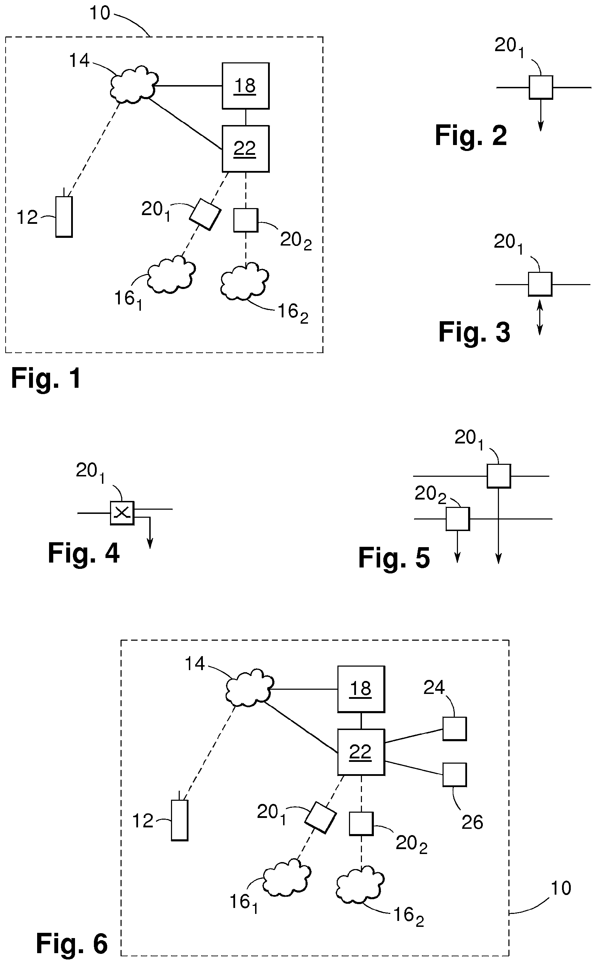

In fig. 1 there is disclosed a block diagram of a system 10 operable to manage roaming of a mobile equipment 12, when the mobile equipment 12 is roaming between a home network 14, and a foreign network 16. In fig. 1 there is only disclosed two foreign networks 16₁ and 16₂, for the sake of simplicity. The system 10 comprises a Home Location Register 18 connected to the home network 14. As also is apparent in fig. 1, the system 10 also comprises two monitor means 20₁ and 20₂, each of which is operable to monitor a cable in order to detect packets sent on the cable. In the general case, the system 10 comprises N number of monitor means 20₁, ..., 20_{N}, wherein N is an integer, and N ≥ 1. Furthermore, the system 10 also comprises a control system 22 connected to the monitor means 20₁ and 20₂, the Home Location Register 18, and the home network 14. The control system 22 is operable to decide if a packet is a roaming event. If it is decided that a packet is a roaming event, the control system 22 is operable to trigger an action in connection to roaming.

In fig. 2 there is disclosed a block diagram of a first embodiment of a monitor means 20₁ comprised in the system 10. In this case each monitor means 20₁; ....; 20_{N} is a passive probe 20₁; ...; 20_{N}.

In fig. 3 there is disclosed a block diagram of a second embodiment of a monitor means 20₁ comprised in the system 10. In this case each monitor means 20₁; ...; 20_{N} is an active probe 20₁; ...; 20_{N}.

In fig. 4 there is disclosed a block diagram of a third embodiment of a monitor means 20₁ comprised in the system 10. In this case each monitor means 20₁; ...; 20_{N} is a router, or a switch 20₁; ...; 20_{N} operable to perform port mirroring. Port mirroring is used in a network switch to send a copy of all network packets seen on one switch port (or an entire VLAN) to a network monitoring connection on another switch port.

The active probe 20₁ disclosed in fig. 3 can be a filter means operable to discard some of the packets, and to forward the rest of the packets.

In fig. 5 there is schematically disclosed the situation where two nodes are connected with two cables. In the disclosed case there are two cables, e. g. Ethernet cables, connected between two different nodes (not disclosed). The reason for this is redundancy or load reason. Furthermore, there is also one monitor means 20₁ and 20₂ for each cable. The monitor means 20₁ and 20₂ are also connected to the control system (not disclosed). Note that sometimes it is necessary to probe more than one cable since it is not predictable which cables are used for a certain communication due to the nature of the Internet protocols.

In fig. 6 there is disclosed a more detailed block diagram of a first embodiment of a system 10 operable to manage roaming of a mobile equipment 12 according to the present invention. As is apparent in fig. 6, this system 10 comprises a lot of elements in common with the system 10 disclosed in fig. 1, and these element, which all have corresponding reference signs, will not be described in detail again. The system 10 also comprises a first means 24 connected to the control system 22 and operable to store a first list customized for each subscriber. The first list comprises information regarding the countries visited by the mobile equipment 12, number of times a certain country have been visited by the mobile equipment 12, and for how long time the certain country have been visited by the mobile equipment 12. Furthermore, the system 10 also comprises a second means 26 connected to the control system 22 and operable to store a second list customized for each subscriber. The second list comprises information about preferred operators for a part of the countries on the first list. The action triggered by the control system 22 is in this particular case to update the first list. Furthermore, the control system 22 is also operable to periodically examine the first list, and if the first list has changed above a predetermined threshold value, to update the second list, and thereafter to send the updated second list to the mobile equipment 12.

An advantage with the system 10 disclosed in fig. 6 is that it creates an optimal list containing only the preferred operators in the countries a certain subscriber has visited. Since it is likely that any given subscriber only visits a limited number of countries the actual sent updates of the second list in itself will be minimized. This means that the cost for sending updates of the second list will be minimized.

Another advantage with the system 10 disclosed in fig. 6 is that the first means 24 contains the number of times that each subscriber visits a certain country. This means that it might be a good foundation for the operator when selecting and negotiating roaming agreements with another operator.

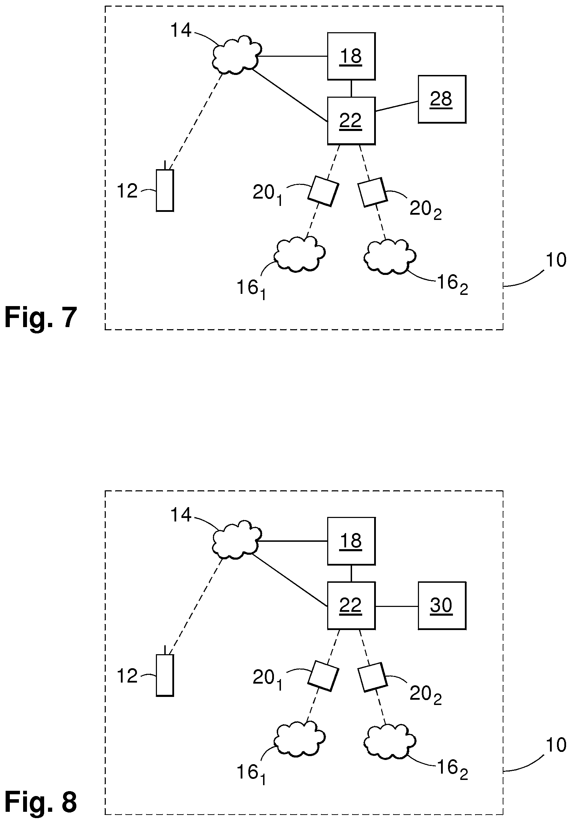

In fig. 7 there is disclosed a more detailed block diagram of a second embodiment of a system 10 operable to manage roaming of a mobile equipment 12 according to the present invention. As is apparent in fig. 7, this system 10 comprises a lot of elements in common with the system 10 disclosed in fig. 1, and these elements, which all have corresponding reference signs, will not be described in detail again. The system 10 also comprises a third means 28 connected to the control system 22 and operable to store a third list customized for each subscriber. The third list comprises information about allowed networks for each subscriber. The action triggered by the control system 22 is in this particular case that the monitor means 20₁ and 20₂ only accepts and forwards roaming requests regarding allowed networks to the Home Location Register 18.

It is pointed out that the third list also can comprise information about forbidden networks for each subscriber. It is also possible with a combination solution, wherein the third list comprises information about both allowed and forbidden networks for each subscriber.

In fig. 8 there is disclosed a more detailed block diagram of a third embodiment of a system 10 operable to manage roaming of a mobile equipment 12 according to the present invention. As is apparent in fig. 8, this system 10 comprises a lot of elements in common with the system 10 disclosed in fig. 1, and these elements, which all have corresponding reference signs, will not be described in detail again. The system 10 also comprises a fourth means 30 connected to the control system 22 and operable to store a fourth list customized for each subscriber. The fourth list comprises information regarding the costs to use a certain network, and when a message is to be sent to a subscriber based on previous subscriber history. It is pointed out that the previous subscriber history is stored in the Personal Roaming Centre (PRC; not disclosed in fig. 8). The action triggered by the control system 22 is in this particular case to send a message to the mobile equipment 12. It is pointed out that the message comprises a list of allowed/ forbidden networks for a particular subscriber. This service keeps track of in which networks a subscriber roams into by using roaming events from a monitor means 20₁/probe that e. g. listen on SIGTRAN links containing the international signalling traffic. This service is multi lingual in its nature meaning that a certain subscriber is sent messages using a preferred language. Note also that this service can be used for sending "welcome messages" to subscribers belonging to other operators when they are roamed into the current operator's network.

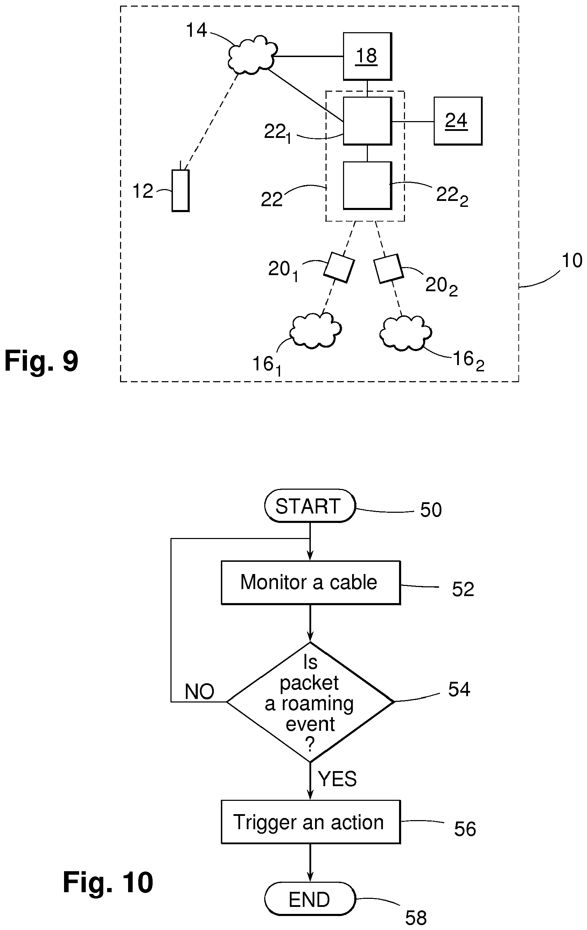

In fig. 9 there is disclosed a more detailed block diagram of a fourth embodiment of a system 10 operable to manage roaming of a mobile equipment 12 according to the present invention. As is apparent in fig. 9, this system 10 comprises a lot of elements in common with the system 10 disclosed in fig. 1, and these elements, which all have corresponding reference signs, will not be described in detail again. The system 10 also comprises a first means 24 connected to the control system 22 and operable to store a first list customized for each subscriber. The first list comprises information regarding the countries visited by the mobile equipment 12, number of times a certain country have been visited by the mobile equipment 12, and for how long time the certain country have been visited by the mobile equipment 12. As also is apparent in fig. 9, the control system 22 comprises a statistics node 22₁ connected to the first means 24 and the Home Location Register 18, and a roaming subscriber node 22₂ connected to the statistics node 22₁. The action triggered by the control system 22 is to store statistics about each subscriber. In this situation the monitor means 20₁/probe normally listens on SIGTRAN links containing the international signalling traffic.

It is pointed out that that the statistics can be stored in the database located in the PRC or in an external database connectable to the system. Examples of statistics are used mobile equipment, visited country, visited network id, attachment time to network, detachment time from network, and calls made in network.

In fig. 10 there is disclosed a flow chart of a method for managing roaming of a mobile equipment according to the present invention. The method is for managing roaming of a mobile equipment 12 of a subscriber with the aid of a system 10 (see e. g. fig. 1), when the mobile equipment 12 is roaming between a home network 14, and a foreign network 16. The method begins at block 50. The method continues, at block 52, with the step: with the aid of N number of monitor means 20₁, ..., 20_{N} comprised in the system 10, wherein N is an integer, and N ≥ 1, each monitor means 20₁; ...; 20_{N} monitor a cable in order to detect packets sent on the cable. Thereafter, the method continues, at block 54, to ask the question: Is a packet a roaming event? If the answer is negative, the step according to block 52 is performed again. If, on the other hand, the answer is affirmative, the method continues, at block 56, with the step: with the aid of the control system 22, to trigger an action in connection to roaming. The method is completed at block 58.

According to one preferred embodiment of the method, each monitor means 20₁; ...; 20_{N} is a passive probe.

According to another alternative each monitor means 20₁; ...; 20_{N} is an active probe.

According to yet another alternative each monitor means 20₁; ...; 20_{N} is a router, or a switch, and the method also comprises the step: with the aid of the router, or switch, to perform port mirroring.

According to a preferred embodiment of the method, each active probe 20₁; ...; 20_{N} is a filter means, and the method also comprises the step: with the aid of the filter means, to discard some of the packets, and to forward the rest of the packets.

According to a first alternative of the method, it also comprises the steps:
- with the aid of a first means 24 comprised in the system 10, to store a first list customized for each subscriber, the first list comprises information regarding the countries visited by the mobile equipment 12, number of times a certain country have been visited by the mobile equipment 12, and for how long time the certain country have been visited by the mobile equipment 12;
- with the aid of a second means 26 comprised in the system 10, to store a second list customized for each subscriber, the second list comprises information about preferred operators for a part of the countries on the first list;
- wherein the action triggered by the control system 22 is to update the first list;
- with the aid of the control system 22, to periodically examine the first list;
- if the first list has changed above a predetermined threshold, with the aid of the control system 22, to update the second list; and
- to send the updated second list to the mobile equipment 12.

According to a second alternative the method also comprises the steps:
- with the aid of a third means 28 comprised in the system 10, to store a third list customized for each subscriber, the third list comprises information about allowed networks for each subscriber; and
- wherein the action triggered by the control system 22 is that the monitor means 20₁, ..., 20_{N} only accepts and forwards roaming requests regarding allowed networks to the Home Location Register 18.

According to a third alternative the method also comprises the steps:
- with the aid of a fourth means 30 comprised in the system 10, to store a fourth list customized for each subscriber, the fourth list comprises information regarding the costs to use a certain network, and when a message is to be sent to a subscriber based on previous history; and
- wherein the action triggered by the control system 22 is to send a message to the mobile equipment 12.

According to a fourth alternative the method also comprises the steps:
- with the aid of a first means 24 comprised in the system 10, to store a first list customized for each subscriber, the first list comprises information regarding the countries visited by the mobile equipment 12, number of times a certain country have been visited by the mobile equipment 12, and for how long time the certain country have been visited by the mobile equipment 12; and
- wherein the action triggered by the control system 22 is to store statistics about each subscriber with the aid of a statistics node 22₁ comprised in the control system 22, and connected to the first means 24, and the Home Location Register 18, and a roaming subscriber node 22₂ comprised in the control system 22, and connected to the statistics node 22₁.

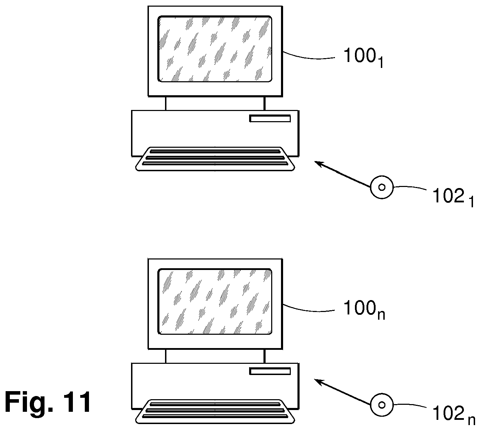

In fig. 11 there is schematically disclosed some computer program products 102₁, ..., 102ₙ according to the present invention. In fig. 11, n different digital computers 100₁, ..., 100ₙ are shown, wherein n is an integer. In fig. 11, n different computer program products 102₁, ..., 102₂ are shown, here shown in the form of CD discs. The different computer program products 102₁, ..., 102ₙ are directly loadable into the internal memory of the n different computers 100₁, ..., 100ₙ. Each computer program product 102₁, ..., 102ₙ comprises software code portions for executing all the steps according to fig. 10, when the product/products is/are run on the computers 100₁, ..., 100ₙ. The computer program products 102₁, ..., 102ₙ may, for instance, be in the form of diskettes, RAM discs, magnetic tapes, magneto-optical discs or some other suitable products.

The present invention enables roaming management of mobile equipment between a home network and a foreign network where the home network e. g. can be based on the SIGTRAN transmission protocol and the foreign network e. g. can be based on either SIGTRAN or SS7.

The present invention makes it possible to create roaming services on a SIGTRAN based operator network. Several services can use the same probes and deep inspection methodology in order to trap roaming events that are used by the services.

The present invention also makes it possible to handle the case where foreign networks are either a SIGTRAN network or a SS7 network by using an appropriate probe. The probe is the connected to the roaming service system.

The invention is not limited to the described embodiments. It will be evident for those skilled in the art that many different modifications are feasible within the scope of the following Claims.

## Claims

1. A system (10) operable to manage roaming of a mobile equipment (12) of a subscriber, when said mobile equipment (12) is roaming between a home network (14) and a foreign network (16), said system (10) comprising a Home Location Register (18) connected to said home network (14), **characterized in that** said system (10) also comprises N number of monitor means (20₁, ..., 20_{N}), wherein N is an integer, and N ≥ 1, wherein each monitor means (20₁; ....; 20_{N}) is operable to monitor a cable in order to detect packets sent on said cable, and a control system (22) connected to said N number of monitor means (20₁, ..., 20_{N}), and operable to decide if a packet is a roaming event, and if it is decided that a packet is a roaming event, said control system (22) is also operable to trigger an action in connection to roaming, and **in that** said system (10) also comprises a first means (24) operable to store a first list customized for each subscriber, said first list comprises information regarding the countries visited by said mobile equipment (12), number of times a certain country have been visited by said mobile equipment (12), and for how long time said certain country have been visited by said mobile equipment (12), a second means (26) operable to store a second list customized for each subscriber, said second list comprises information about preferred operators for a part of said countries on said first list, wherein said control system (22) also is connected to said home network (14), said foreign network (16), said Home Location Register (18), said first means (24), and said second means (26), and **in that** said action triggered by said control system (22) is to update said first list, and wherein said control system (22) also is operable to periodically examine said first list, and if said first list has changed above a predetermined threshold value, to update said second list, and thereafter to send said updated second list to said mobile equipment (12).

2. A system (10) operable to manage roaming of a mobile equipment (12) of a subscriber according to Claim 1, wherein each said monitor means (20₁; ...; 20_{N}) is a passive probe (20₁; ...; 20_{N}).

3. A system (10) operable to manage roaming of a mobile equipment (12) of a subscriber according to Claim 1 wherein each said monitor means (20₁; ...; 20_{N}) is an active probe (20₁; ...; 20_{N}).

4. A system (10) operable to manage roaming of a mobile equipment (12) of a subscriber according to Claim 1 wherein each said monitor means (20₁; ...; 20_{N}) is a router, or a switch (20₁; ...; 20_{N}) operable to perform port mirroring.

5. A system (10) operable to manage roaming of a mobile equipment (12) of a subscriber according to Claim 3, wherein each said active probe (20₁; ...; 20_{N}) is a filter means (20₁; ...; 20_{N}) operable to discard some of the packets, and to forward the rest of the packets.

6. A method for managing roaming of a mobile equipment (12) of a subscriber with the aid of a system (10), when said mobile equipment (12) is roaming between a home network (14), and a foreign network (16), said method **characterized in that** it comprises the steps:
- with the aid of N number of monitor means (20₁, ..., 20_{N}) comprised in said system (10), wherein N is an integer, and N ≥ 1, each monitor means (20₁; ...; 20_{N}) monitor a cable in order to detect packets sent on said cable;
- with the aid of a control system (22) comprised in said system (10), and connected to said N number of monitor means (20₁, ..., 20_{N}), to decide if a packet is a roaming event;
- if it is decided that a packet is a roaming event, with the aid of said control system (22), to trigger an action in connection to roaming;
- with the aid of a first means (24) comprised in said system (10), to store a first list customized for each subscriber, said first list comprises information regarding the countries visited by said mobile equipment (12), number of times a certain country have been visited by said mobile equipment (12), and for how long time said certain country have been visited by said mobile equipment (12);
- with the aid of a second means (26) comprised in said system (10), to store a second list customized for each subscriber, said second list comprises information about preferred operators for a part of said countries on said first list;
- wherein said action triggered by said control system (22) is to update said first list;
- with the aid of said control system (22), to periodically examine said first list;
- if said first list has changed above a predetermined threshold value, with the aid of said control system (22), to update said second list; and
- to send said second updated list to said mobile equipment (12).

7. A method for managing roaming of a mobile equipment (12) of a subscriber according to Claim 6, wherein each said monitor means (20₁; ...; 20_{N}) is a passive probe (20₁; ...; 20_{N}).

8. A method for managing roaming of a mobile equipment (12) of a subscriber according to Claim 6, wherein each said monitor means (20₁; ...; 20_{N}) is an active probe (20₁; ...; 20_{N}).

9. A method for managing roaming of a mobile equipment (12) of a subscriber according to Claim 6, wherein each said monitor means (20₁; ...; 20_{N}) is a router, or a switch (20₁; ...; 20_{N}), and said method also comprises the step:
- with the aid of said router, or switch (20₁, ..., 20_{N}), to perform port mirroring.

10. A method for managing roaming of a mobile equipment (12) of a subscriber according to Claim 8, wherein each said active probe (20₁; ...; 20_{N}) is a filter means (20₁; ...; 20_{N}), and said method also comprises the step:
- with the aid of said filter means (20₁, ..., 20_{N}), to discard some of the packets, and to forward the rest of the packets.

11. At least one computer program product (102₁, ..., 102ₙ) directly loadable into the internal memory of at least one digital computer (100₁, ..., 100ₙ), comprising software code portion for performing the steps of Claim 6 when said at least one product (102₁, ..., 102ₙ) is/are run on said at least one computer (100₁, ..., 100ₙ).

## Patentansprüche

1. System (10), das betreibbar ist, das Roaming eines mobilen Geräts (12) eines Teilnehmers zu managen, wenn das mobile Gerät (12) zwischen einem Heimnetz (14) und einem fremden Netz (16) ein Roaming durchführt, wobei das System (10) ein Heimortsregister (18) umfasst, das mit dem Heimnetz (14) verbunden ist, **dadurch gekennzeichnet, dass** das System (10) auch eine Anzahl N von Überwachungsmitteln (20₁, ..., 20_{N}), wobei N eine ganze Zahl ist und N ≥ 1, wobei jedes Überwachungsmittel (20₁, ...; 20_{N}) betreibbar ist, ein Kabel zu überwachen, um Pakete zu detektieren, die auf dem Kabel gesendet werden, und ein Steuersystem (22) umfasst, das mit der Anzahl N von Überwachungsmitteln (20₁, ..., 20_{N}) verbunden ist und betreibbar ist, zu entscheiden, ob ein Paket ein Roaming-Ereignis ist, und wenn entschieden wird, dass ein Paket ein Roaming-Ereignis ist, das Steuersystem (22) auch betreibbar ist, eine Handlung in Verbindung mit dem Roaming auszulösen, und dass das System (10) auch ein erstes Mittel (24), das betreibbar ist, ein erste Liste zu speichern, die für jeden Teilnehmer individuell angepasst ist, wobei die erste Liste Informationen hinsichtlich der vom mobilen Gerät (12) besuchten Länder, die Anzahl von Malen, die ein bestimmtes Land durch das mobile Gerät (12) besucht wurde, und für wie lange das bestimmte Land durch das mobile Gerät (12) besucht wurde, umfasst, ein zweites Mittel (26) umfasst, das betreibbar ist, eine zweite Liste zu speichern, die für jeden Teilnehmer individuell angepasst ist, wobei die zweite Liste Informationen über bevorzugte Betreiber für einen Teil der Länder auf der ersten Liste umfasst, wobei das Steuersystem (22) auch mit dem Heimnetz (14), dem fremden Netz (16), dem Heimortsregister (18), dem ersten Mittel (24) und dem zweiten Mittel (26) verbunden ist, und dass die durch das Steuersystem (22) ausgelöste Handlung darin besteht, die erste Liste zu aktualisieren, und wobei das Steuersystem (22) auch betreibbar ist, periodisch die erste Liste zu untersuchen, und wenn sich die erste Liste über einem vorbestimmten Schwellenwert geändert hat, die zweite Liste zu aktualisieren, und danach die aktualisierte zweite Liste zum mobilen Gerät (12) zu senden.

2. System (10), das betreibbar ist, das Roaming eines mobilen Geräts (12) eines Teilnehmers zu managen, nach Anspruch 1, wobei jedes Überwachungsmittel (20₁, ...; 20_{N}) eine passive Sonde (20₁, ...; 20_{N}) ist.

3. System (10), das betreibbar ist, das Roaming eines mobilen Geräts (12) eines Teilnehmers zu managen, nach Anspruch 1, wobei jedes Überwachungsmittel (20₁, ...; 20_{N}) eine aktive Sonde (20₁, ...; 20_{N}) ist.

4. System (10), das betreibbar ist, das Roaming eines mobilen Geräts (12) eines Teilnehmers zu managen, nach Anspruch 1, wobei jedes Überwachungsmittel (20₁, ...; 20_{N}) ein Router oder eine Leitungsvermittlungsstelle (20₁, ...; 20_{N}) ist, die betreibbar ist, eine Port-Spiegelung durchzuführen.

5. System (10), das betreibbar ist, das Roaming eines mobilen Geräts (12) eines Teilnehmers zu managen, nach Anspruch 3, wobei jede aktive Sonde (20₁, ...; 20_{N}) ein Filtermittel (20₁, ...; 20_{N}) ist, das betreibbar ist, einige der Pakete zu verwerfen und den Rest der Pakete weiterzuleiten.

6. Verfahren zum Managen des Roaming eines mobilen Geräts (12) eines Teilnehmers mit Hilfe eines Systems (10), wenn das mobile Gerät (12) zwischen einem Heimnetz (14) und einem fremden Netz (16) Roaming durchführt, wobei das Verfahren **dadurch gekennzeichnet ist, dass** es die folgenden Schritte umfasst:
- mit Hilfe einer Anzahl N von Überwachungsmitteln (20₁, ..., 20_{N}), die in dem System (10) enthalten sind, wobei N eine ganze Zahl ist und N ≥ 1, wobei jedes Überwachungsmittel (20₁, ...; 20_{N}) ein Kabel überwacht, auf dem Kabel gesendete Pakete zu detektieren;
- mit Hilfe eines Steuersystems (22), das in dem System (10) enthalten ist und mit der Anzahl N von Überwachungsmitteln (20₁, ..., 20_{N}) verbunden ist, zu entscheiden, ob ein Paket ein Roaming-Ereignis ist;
- wenn entschieden wird, dass ein Paket ein Roaming-Ereignis ist, mit Hilfe des Steuersystems (22) eine Handlung in Verbindung mit dem Roaming auszulösen;
- mit Hilfe eines ersten Mittels (24), das in dem System (10) enthalten ist, eine erste Liste zu speichern, die für jeden Teilnehmer individuell angepasst ist, wobei die erste Liste Informationen hinsichtlich der von dem mobilen Gerät (12) besuchten Länder, die Anzahl von Malen, die ein bestimmtes Land von dem mobilen Gerät (12) besucht wurde, und für wie lange das bestimmte Land durch das mobile Gerät (12) besucht wurde, umfasst;
- mit Hilfe eines zweiten Mittels (26), das in dem System (10) enthalten ist, eine zweite Liste zu speichern, die für jeden Teilnehmer individuell angepasst ist, wobei die zweite Liste Informationen über bevorzugte Betreiber für einen Teil der Länder auf der ersten Liste umfasst;
- wobei die durch das Steuersystem (22) ausgelöste Handlung darin besteht, die erste Liste zu aktualisieren;
- mit Hilfe des Steuersystems (22) periodisch die erste Liste zu untersuchen;
- wenn sich die erste Liste über einem vorbestimmten Schwellenwert geändert hat, mit Hilfe des Steuersystems (22) die zweite Liste zu aktualisieren; und
- die zweite aktualisierte Liste zum mobilen Gerät (12) zu senden.

7. Verfahren zum Managen des Roaming eines mobilen Geräts (12) eines Teilnehmers nach Anspruch 6, wobei jedes Überwachungsmittel (20₁, ...; 20_{N}) eine passive Sonde (20₁, ...; 20_{N}) ist.

8. Verfahren zum Managen des Roaming eines mobilen Geräts (12) eines Teilnehmers nach Anspruch 6, wobei jedes Überwachungsmittel (20₁, ...; 20_{N}) eine aktive Sonde (20₁, ...; 20_{N}) ist.

9. Verfahren zum Managen des Roaming eines mobilen Geräts (12) eines Teilnehmers nach Anspruch 6, wobei jedes Überwachungsmittel (20₁, ...; 20_{N}) ein Router oder eine Leitungsvermittlungsstelle (20₁, ...; 20_{N}) ist und das Verfahren auch den folgenden Schritt umfasst:
- mit Hilfe des Routers oder der Leitungsvermittlungsstelle (20₁, ..., 20_{N}) eine Port-Spiegelung durchzuführen.

10. Verfahren zum Managen des Roaming eines mobilen Geräts (12) eines Teilnehmers nach Anspruch 8, wobei jede aktive Sonde (20₁, ...; 20_{N}) ein Filtermittel (20₁, ...; 20_{N}) ist und das Verfahren auch den folgenden Schritt umfasst:
- mit Hilfe des Filtermittels (20₁, ..., 20_{N}) einige der Pakete zu verwerfen und den Rest der Pakete weiterzuleiten.

11. Mindestens ein Computerprogrammprodukt (102₁, ..., 102ₙ), das direkt in den internen Speicher mindestens eines digitalen Computers (100₁, ..., 100ₙ) ladbar ist, mit einem Softwarecodeteil zum Durchführen der Schritte von Anspruch 6, wenn das mindestens eine Produkt (102₁, ..., 102ₙ) auf dem mindestens einen Computer (100₁, ..., 100ₙ) betrieben wird.

## Revendications

1. Système (10) pouvant gérer l'itinérance d'un équipement mobile (12) d'un abonné, lorsque ledit équipement mobile (12) est itinérant entre un réseau domestique (14) et un réseau étranger (16), ledit système (10) comprenant un registre des abonnés locaux (18) connecté audit réseau domestique (14), **caractérisé en ce que** ledit système (10) comprend également un nombre N de moyens de surveillance (20₁, ..., 20_{N}), dans lequel N est un nombre entier et N ≥ 1, dans lequel chaque moyen de surveillance (20₁, ..., 20_{N}) peut surveiller un câble afin de détecter des paquets envoyés sur ledit câble, et un système de commande (22) raccordé audit nombre N de moyens de surveillance (20₁, ..., 20_{N}) et pouvant décider si un paquet est un événement d'itinérance et, s'il est décidé qu'un paquet est un événement d'itinérance, ledit système de commande (22) peut également déclencher une action en rapport avec l'itinérance, et **en ce que** ledit système (10) comprend également un premier moyen (24) pouvant stocker une première liste personnalisée pour chaque abonné, ladite première liste comprend des informations se rapportant aux pays visités par ledit équipement mobile (12), au nombre de fois qu'un certain pays a été visité par ledit équipement mobile (12) et à la durée pendant laquelle ledit certain pays a été visité par ledit équipement mobile (12), un second moyen (26) pouvant stocker une seconde liste personnalisée pour chaque abonné, ladite seconde liste comprend des informations concernant des opérateurs préférés pour une partie desdits pays sur ladite première liste, dans lequel ledit système de commande (22) est également connecté audit réseau domestique (14), audit réseau étranger (16), audit registre des abonnés locaux (18), audit premier moyen (24) et audit second moyen (26), et **en ce que** ladite action déclenchée par ledit système de commande (22) est destinée à mettre à jour ladite première liste et dans lequel ledit système de commande (22) peut également examiner périodiquement ladite première liste et, si ladite première liste est passée au-dessus d'une valeur de seuil prédéterminée, mettre à jour ladite seconde liste et, par la suite, envoyer ladite seconde liste mise à jour audit équipement mobile (12).

2. Système (10) pouvant gérer l'itinérance d'un équipement mobile (12) d'un abonné selon la revendication 1, dans lequel chaque dit moyen de surveillance (20₁; ... ; 20_{N}) est une sonde passive (20₁ ; ... ; 20_{N}).

3. Système (10) pouvant gérer l'itinérance d'un équipement mobile (12) d'un abonné selon la revendication 1, dans lequel chaque dit moyen de surveillance (20₁; ... ; 20_{N}) est une sonde active (20₁ ; ... ; 20_{N}).

4. Système (10) pouvant gérer l'itinérance d'un équipement mobile (12) d'un abonné selon la revendication 1, dans lequel chaque dit moyen de surveillance (20₁; ... ; 20_{N}) est un routeur ou un commutateur (20₁ ; ... ; 20_{N}) pouvant réaliser une duplication de ports.

5. Système (10) pouvant gérer l'itinérance d'un équipement mobile (12) d'un abonné selon la revendication 3, dans lequel chaque dite sonde active (20₁ ; ... ; 20_{N}) est un moyen de filtrage (20₁ ; ... ; 20_{N}) pouvant se débarrasser d'une partie des paquets et transmettre le reste des paquets.

6. Procédé pour gérer l'itinérance d'un équipement mobile (12) d'un abonné avec l'aide d'un système (10), lorsque ledit équipement mobile (12) est itinérant entre un réseau domestique (14) et un réseau étranger (16), ledit procédé étant **caractérisé en ce qu'**il comprend les étapes consistant :
- avec l'aide d'un nombre N de moyens de surveillance (20₁, ..., 20_{N}) inclus dans ledit système (10), dans lequel N est un nombre entier et N ≥ 1, chaque moyen de surveillance (20₁, ..., 20_{N}) surveille un câble afin de détecter des paquets envoyés sur ledit câble ;
- avec l'aide d'un système de commande (22) inclus dans ledit système (10) et raccordé audit nombre N de moyens de surveillance (20₁, ..., 20_{N}) à décider si un paquet est un événement d'itinérance ;
- s'il est décidé qu'un paquet est un événement d'itinérance, avec l'aide dudit système de commande (22), à déclencher une action en rapport avec l'itinérance ;
- avec l'aide d'un premier moyen (24) inclus dans ledit système (10), à stocker une première liste personnalisée pour chaque abonné, ladite première liste comprend des informations se rapportant aux pays visités par ledit équipement mobile (12), au nombre de fois qu'un certain pays a été visité par ledit équipement mobile (12) et à la durée pendant laquelle ledit certain pays a été visité par ledit équipement mobile (12) ;
- avec l'aide d'un second moyen (26) inclus dans ledit système (10), à stocker une seconde liste personnalisée pour chaque abonné, ladite seconde liste comprend des informations concernant des opérateurs préférés pour une partie desdits pays sur ladite première liste ;
- dans lequel ladite action déclenchée par ledit système de commande (22) est destinée à mettre à jour ladite première liste ;
- avec l'aide dudit système de commande (22), à examiner périodiquement ladite première liste ;
- si ladite première liste est passée au-dessus d'une valeur de seuil prédéterminée, avec l'aide dudit système de commande (22), à mettre à jour ladite seconde liste ; et
- à envoyer ladite seconde liste mise à jour audit équipement mobile (12).

7. Procédé pour gérer l'itinérance d'un équipement mobile (12) d'un abonné selon la revendication 6, dans lequel chaque dit moyen de surveillance (20₁ ; ... ; 20_{N}) est une sonde passive (20₁ ; ... ; 20_{N}).

8. Procédé pour gérer l'itinérance d'un équipement mobile (12) d'un abonné selon la revendication 6, dans lequel chaque dit moyen de surveillance (20₁ ; ... ; 20_{N}) est une sonde active (20₁ ; ... ; 20_{N}).

9. Procédé pour gérer l'itinérance d'un équipement mobile (12) d'un abonné selon la revendication 6, dans lequel chaque dit moyen de surveillance (20₁ ; ... ; 20_{N}) est un routeur ou un commutateur (20₁ ; ... ; 20_{N}) et ledit procédé comprend également l'étape consistant :
- avec l'aide dudit routeur ou dudit commutateur (20₁, ..., 20_{N}), à réaliser une duplication de ports.

10. Procédé pour gérer l'itinérance d'un équipement mobile (12) d'un abonné selon la revendication 8, dans lequel chaque dite sonde active (20₁ ; ... ; 20_{N}) est un moyen de filtrage (20₁ ; ... ; 20_{N}) et ledit procédé comprend également l'étape consistant :
- avec l'aide dudit moyen de filtrage (20₁, ..., 20_{N}), à se débarrasser d'une partie des paquets et à transmettre le reste des paquets.

11. Au moins un produit-programme d'ordinateur (102₁, ..., 102_{N}) pouvant être chargé directement dans la mémoire interne d'au moins un ordinateur numérique (100₁, ..., 100_{N}), comprenant une partie de code logiciel pour réaliser les étapes selon la revendication 6 lorsque ledit ou lesdits produits (102₁, ..., 102_{N}) s'exécutent sur ledit ou lesdits ordinateurs (100₁, ..., 100_{N}).
